Europäisches Patentamt

(19) European Patent Office

Office européen des brevets

(11) Publication number: **0 057 307**
**A1**

# EUROPEAN PATENT APPLICATION

(21) Application number: 81302850.3

(22) Date of filing: 24.06.81

(51) Int. Cl.³: **E 06 B 3/05**

(30) Priority: 04.02.81 GB 8103401

(71) Applicant: **HARRY FAIRCLOUGH (JOINERY) LIMITED,
Fairclough Avenue, Howley Warrington WA1 2JT (GB)**

(43) Date of publication of application: **11.08.82
Bulletin 82/32**

(72) Inventor: **Walsh, John Arthur, 1 Orchard Court Smith's
Lane, Weaverham Cheshire (GB)**

(74) Representative: **Jones, Colin et al, W.P. THOMPSON &
CO. Coopers Building Church Street, Liverpool L1 3AB
(GB)**

(84) Designated Contracting States: **AT BE CH DE FR IT LI
NL SE**

(54) Improvements in or relating to frames for use in building construction and to methods of constructing them.

㉗ A window or door frame (10) has at at least one corner a mitre joint (10) between two adjacent members (30, 32) which joint is reinforced by at least one double dovetail or key-shaped insert (46) driven into complementarily shaped slots (38, 40, 42, 44) in the end faces (34, 36) of the members facing one another at that corner. A single pair of slots and insert, or a plurality of pairs of slots and inserts can be provided at each corner of a frame, and the inserts and respective complementary slots can be the same throughout or differently shaped in cross-section: the inserts can be pre-cut to length and can have pre-shaped ends before insertion and can be finished flush with the inwardly and outwardly facing surfaces of the frame members. Adhesive can be used between the member end faces and/or between slots and insert. The longitudinal axes of a pair of slots and insert are parallel to the plane of the frame.

## DESCRIPTION

"IMPROVEMENTS IN OR RELATING TO FRAMES FOR USE IN
BUILDING CONSTRUCTION AND TO METHODS OF CONSTRUCTING THEM"

The present invention relates to frames for use in building construction and to methods of constructing them.

The use of frames in building construction is well known. Such frames include window frames for casement or sash windows, casements or hinged lights of casement windows, sashes or sliding lights of sash windows, door frames, and doors. Such frames are frequently of wood and conventionally in door and window frames tenon and mortise joints have been used between the jambs and heads of door frames and between the jambs and top and bottom rails of window frames, whilst comb joints have been used between the stiles and top and bottom rails of doors and between the stiles and top and bottom rails of sash and casement windows. One disadvantage of both tenon and mortise joints and comb joints is that in either case end grain of at least one of the jambs and head or rails or of the stiles and rails is exposed and is liable to deteriorate due to weather effects particularly the penetration of moisture especially in windows.

According to one feature of the present invention a frame for use in building construction, such as a door frame or a window frame, has at at least one corner a mitre joint between two adjacent members forming that corner and the joint is reinforced by at least one insert which is double dovetail or key shaped in cross section and which is driven into complementarily shaped slots formed in the mitred end faces of the members abutting one another at that corner, the longitudinal axes of the slots lying in a plane substantially parallel to a plane containing the longitudinal axes of the two adjacent members forming the corner.

0057307

With a mitre joint at a corner of a frame the end grain of the members at that corner can be substantially entirely covered so that they need not then be exposed to weather or other harmful effects. The insert can be of hard wood or plastics or other material and the ends of the insert can be finished off so as to be flush with those surfaces of the members which face inwardly and also outwardly of the frame. Preferably a layer or layers of an adhesive is disposed between the end faces forming the mitre joint. The insert can be a good push fit into the slots formed in the end faces of the members whereby sufficiently good contact may be made between the insert and the slots to substantially reduce the risk of ingress of moisture, but if desired. an adhesive may be placed between the insert and the slots.

According to a further feature of the present invention a method of constructing a frame for use in building construction, such as a door frame or a window frame includes the steps of cutting or forming the end faces of two members to be joined to one another at a corner of the frame to form a mitre joint therebetween, forming at least one dovetail or key shaped slot in each mitred end face at locations therein such that, when said mitred end faces are brought together, the slots will be in register with one another, the slots being so formed in the mitred end faces of the members that, when the mitred end faces of the members are brought together, the longitudinal axes of a pair of slots in register will lie in a plane substantially parallel to a plane containing the longitudinal axes of the two members, bringing said mitred end faces of the members into abutment with one another, and inserting into the slots in register with one another an insert of double complementary dovetail or key shaped cross-section.

For the most part windows, window frames, door frames and doors used in building construction are generally rectangular in shape the corners thereof are substantially right angles so that the end faces can be formed at substantially 45° to the longitudinal axes of each member at a corner, but the invention is not restricted solely to rectangular frames and it can be applied to the formation of any corners where two members are to be joined at an angle to one another since in order to form a corresponding mitre joint the end faces of adjoining members should be so formed as to divide the angle between the longitudinal axes of such members.

The invention will be further described by way of example with reference to the accompanying drawings in which:-

Fig.1 is a diagrammatic elevational view of a window,

Fig.2 is an end elevation of the window of Fgi.1,

Fig.3 is a view looking in the direction of the arrow A of Fig.1,

Fig.4 is a diagrammatic exploded perspective view of a joint according to one emboidiment of the present invention,

Fig.5 is a perspective view of a modified insert with its ends shaped prior to insertion in the joint of Fig.4,

Fig.6 is a diagrammatic exploded perspective view of a joint according to a second embodiment of the invention,

Fig.7 is a diagrammatic exploded perspective view of a joint according to a third embodiment of the invention, and

Fig.8 is a diagrammatic exploded perspective view of a fourth embodiment of the invention.

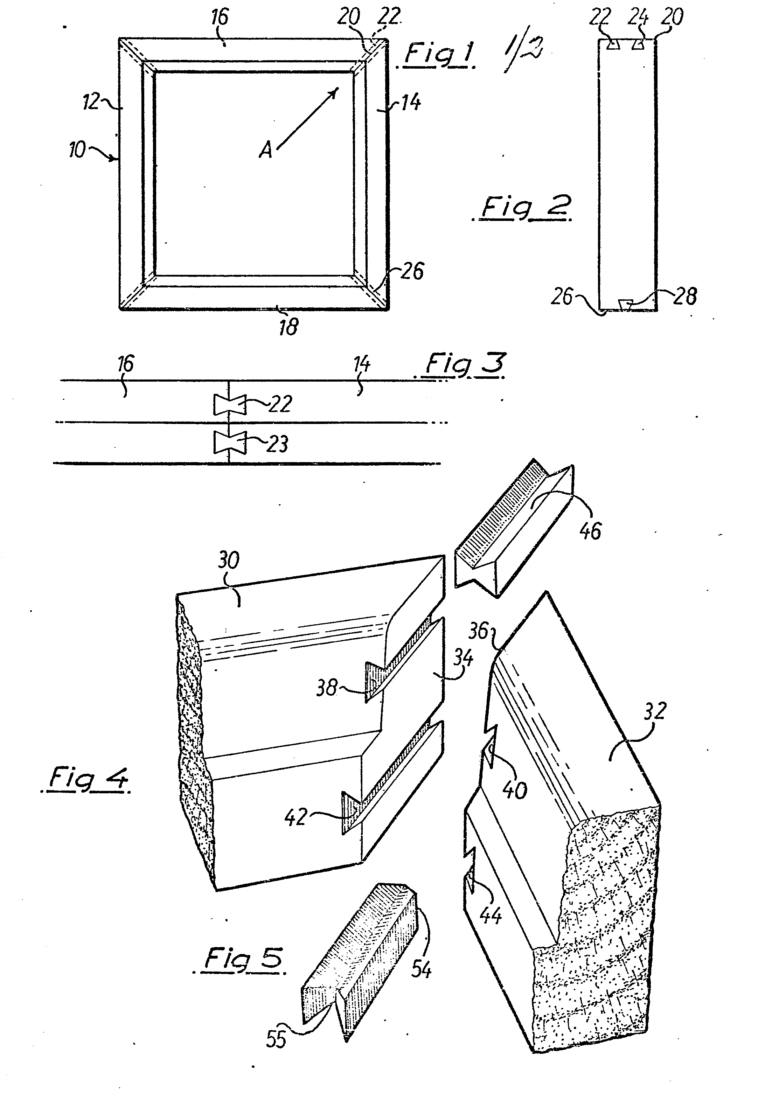

Referring initially to Fig.1, a window frame 10 has vertical stiles 12, 14, a top rail 16 and a bottom rail 18. Each of the stiles 12,14 is joined to the top and bottom rails 16,18 by a mitre joint such as 20 which is reinforced by at least one double dovetail insert 22. Whilst the mitre joint 20 is reinforced by two inserts 22,24 as may be seen more clearly from Figs. 2 and 3 only a single insert may be used such as insert 28 in mitre joint 26 which is also shown in Figs. 1 and 2.

One form of joint embodying the present invention is illustrated in greater detail in Fig.4. Two members 30,32 are to be joined with their longitudinal axes extending substantially at right angles to one another. The end faces 34,36 are formed so as to be in a plane which substantially bisects the angle between the longitudinal axes of the members 30,32 in this case at an angle of 45° to such axes.

A first pair of dovetail slots 38 and 40 is cut in the end faces 34,36 so as to be in register with one another when the end faces are brought into abutment with one another. The dovetail slots are cut so that their lognitudinal axes extend substantially parallel to the bisector of the angle between the longitudinal axes of the members 30,32 when they are brought together. If required a second pair of dovetail grooves 42,44 can also be formed in the end faces 34,36, likewise in register with one another. The end faces 34,36 may conveniently be formed by sawing with a hand or power saw or by machine such as a shear or guillotine. The dovetail slots may conveniently be formed by a router. Both these operations may be carried out by a machine which forms the mitre cut and routers the recess or recesses simultaneously.

In order to form the joint the faces 34,36 of the two members 30,32 are brought into abutment with one another with the dovetail slots in register and into each pair of dovetail slots there is inserted an insert or peg 46 having a double dovetail cross section.  The insert can be inserted either from the inside or from the outside of the joint and is driven along the line of the bisector of the angle that is to say parallel to the plane of the faces 34,36.  Whilst in some cases sufficient rigidity of joint may be obtained merely by the insertion of one insert 46 in a single pair of dovetail grooves in many cases two or more such inserts and pairs of grooves will be desired and alternatively or additionally a layer of adhesive may be placed on one or both of the faces 34,36 before they are brought into abutment with one another.  Moreover, if desired, adhesive may be introduced between an insert 46 and the respective dovetail slots.

After the insert or inserts 46 have been fully inserted their ends are cut off flush with the relevant surfaces of the members 30,32 so as not to project therefrom.  Alternatively if desired the ends of the inserts can be appropriately shaped, as illustrated at 52,54 in Fig.5, prior to insertion such that when fully inserted they will be flush with the respective surfaces of the members 30,32.  Yet again each insert 46 may have a slight longitudinal taper in thickness so as to enable them to be introduced easily into the dovetail slot and to bind more firmly therein as they are more fully inserted.  Where two inserts are employed inserts tapering in opposite directions may be inserted one from the outside of the joint and one tapering in the opposite direction from the inside of the joint.

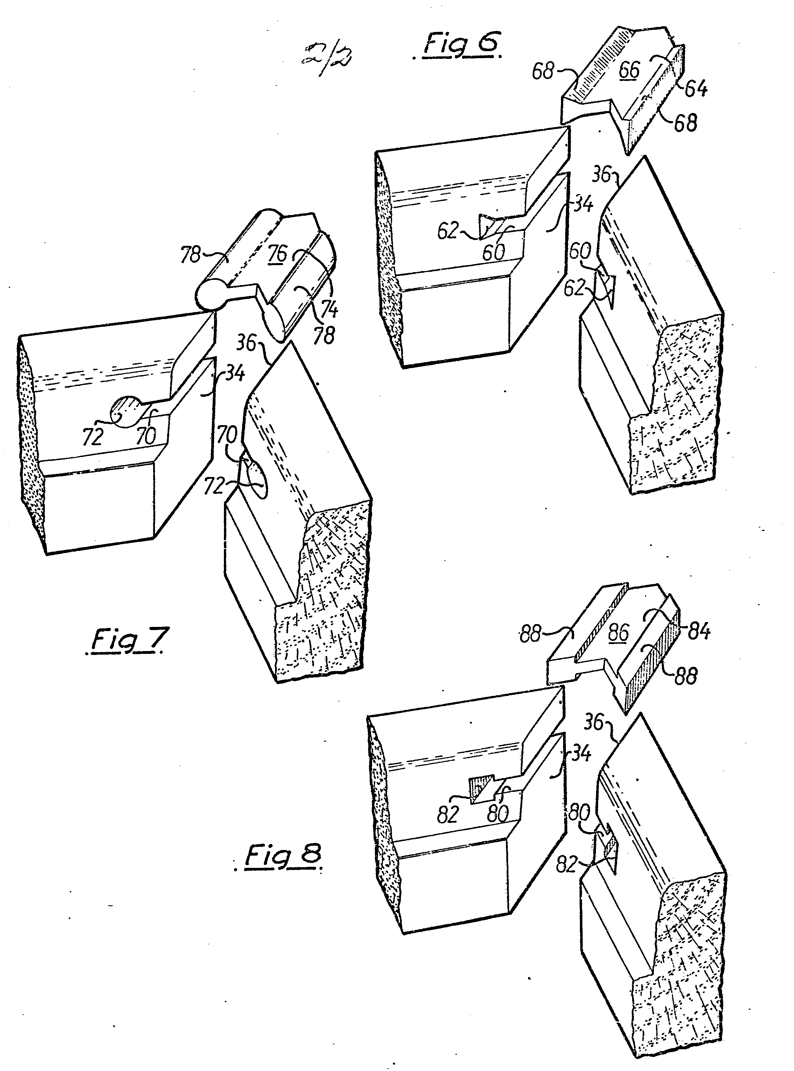

It is not essential that the slots and inserts should be dovetail or trapezoidal in cross-section and other cross-sectional shapes of slots can be used; the primary requirements are that the slots should have a width which is wider in a region remote from the face of the mitre joint and narrower in a region nearer or adjoining the face, and that the inserts have cross-sectional shapes of the slots. Some other cross-sectional shapes that can be used are illustrated in Figs. 6, 7 and 8 and can be referred to as generally key shaped.

In the second embodiment of Fig.6 each slot has a narrower substantially parallel sided portion 60 adjacent and opening into the face 34,36 and a substantially trapezoidal shaped wider portion 62 remote from the face. Insert 64 has a complementary cross-sectional shape including a central substantially parallel sided portion 66 and outer trapezoidal shaped wider portions 68.

In the third embodiment of Fig.7 each slot has a narrower substantially parallel sided portion 70 adjacent and opening into the face 34,36 and a substantially circular wider portion 72 remote from the face. Insert 74 has a complementary cross-sectional shape including a central substantially parallel sided portion 78 and outer arcuate wider portions 78.

In the fourth embodiment of Fig.8 each slot has a narrower substantially parallel sided portion 80 adjacent and opening into the face 34,36 and a substantially rectangular wider portion 84 remote from the face. Insert 84 has a complementary cross-sectional shape including a central substantially parallel sided portion 86 and outer rectangular wider portions 88.

In the embodiments described above with reference to Figs. 6, 7 and 8 only a single slot is shown in each face 34,36 but it will be appreciated that more than one slot can be provided in each face.

Whilst for convenience it is preferable that the slots formed in the opposing faces of the members 30 and 32 should have substantially the same cross-sectional shape, different shapes are possible provided that the relevant part of the insert 46 has a corresponding complementary shape in cross-section.

The present invention is especially useful in the manufacture of windows and window frames from wood and is eminently suitable for use in mass production. Lengths of timber of appropriate cross-section shape are formed initially for example in a moulding machine and from the appropriate length of timber are cut to form the stiles and top and bottom rails for a frame of desired external dimensions. The end faces such as 34 can be formed subsequently or at the same time. A length of timber is then placed in a suitable jig and a router moved across the end face 34 to form a slot 38, the use of a jig being desirable in order that each slot can be formed so as to be in register with a corresponding slot in the end face of another member.

Each of the inserts 46 can be of wood, in which case it is preferable that it should be of a hard wood, though it is also envisaged that the inserts may be of other material. The inserts can be of a plastics material and it has been found that nylon is especially suitable particularly if adhesive is used between the member and an insert since many suitable adhesives bond favourably to nylon.

CLAIMS

1. A mitre joint at a corner between two adjacent members (30,32) of a frame (10) for use in a building construction, which joint (20,26) is reinforced by at least one inser (22,24,28) driven into complementarily shaped slots (38,40,42,44) in the abutting mitred end faces (34,36) of the members (30,32), characterized in that, for the construction of the frame (10) as a window or door frame, the longitudinal axes of the slots (38,40,42,44) in which the insert (22,24,28) of double dovetail or key-shaped cross section are received, lie in a plane parallel to the plane of the frame.

2. A mitre joint as claimed in claim 1, in which the insert is tapered longitudinally to facilitate insertion into the slots and to promote a tight joint.

3. A mitre joint as claimed in claim 1 or 2, in which the ends of the insert are substantially flush with surfaces of the members at the corner which face inwardly and outwardly of the frame.

4. A mitre joint as claimed in claim 1, 2 or 3, in which the insert is of a hard wood.

5. A mitre joint as claimed in claim 1, 2, 3 or 4, in which the insert is of a plastics material.

6. A mitre joint as claimed in claim 5, in which the insert is of nylon.

7. A mitre joint as claimed in any of claims 1 to 6, in which the mitre joint at at least one corner of the frame comprises a plurality of pairs of slots and respective inserts.

8. A method of making a frame for use in a building construction in which the members (12,14,16,18) of the frame (10) are joined together at the corners of the frame by mitre joints (20,26) reinforced by driving inserts (22,24,28) into complementarily shaped slots (38,40,42,44) cut in the mitred end faces (34,36) of the frame members, characterized in.that the slots (38,40,42,44), cut to receive inserts of double dovetail or key-shaped cross section, are cut in directions parallel to the plane of the frame (10) which is a window or door frame.

9. A method as claimed in claim 8, in which the insert is cut to a predetermined length and shaped at its ends prior to insertion in slots.

10. A method as claimed in claim 8 or 9, in which the ends of the insert are finished off substantially flush with the surfaces of the members at the corner which face inwardly and outwardly of the frame.

11. A method as claimed in claim 8, 9 or 10, in which a layer of adhesive is applied to at least one mitred end face prior to bringing the mitred end faces into abutment with one another.

12. A method as claimed in any of claims 8 to 11, in which an adhesive is applied to the slots and/or to the insert prior to driving the insert in the slots.

1/2

0057307

Fig 1

Fig 2

Fig 3

Fig 4

Fig 5

.0057307

2/2

Fig 6

Fig 7

Fig 8

European Patent Office

**EUROPEAN SEARCH REPORT**

0057307

Application number

EP 81 30 2850

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-A-2 927 942 (KAISER)<br><br>*Page 4, paragraph 2; page 5, paragraphs 1-3; page 6, paragraphs 1 and 3; page 8, lines 8-28; page 9, lines 1-4; figures 1-4* | 1,5,8, 11,12 | E 06 B 3/05 |
| Y | | 2,3,7, 9,10 | |
| Y | FR-A-1 175 665 (GISSINGER)<br><br>*Page 1, column 1, paragraph 3, column 2, paragraphs 1-3; figures 1-3* | 1,3,7- 10 | |
| Y | US-A-4 183 187 (SIMARD)<br>*Column 3, lines 28-59; figures 4-7* | 1,2,8 | TECHNICAL FIELDS SEARCHED (Int. Cl. 3) |
| | | | E 06 B |
| Y | US-A-1 793 185 (McCHESNEY)<br>*Page 1, lines 1-20; page 2, lines 38-64 and lines 9-130, page 3, lines 1-12; figures 4 and 17* | 2 | |

The present search report has been drawn up for all claims

| Place of search | Date of completion of the search | Examiner |
|---|---|---|
| THE HAGUE | 07-05-1982 | DEPOORTER F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82